# EUROPEAN PATENT APPLICATION

(11) **EP 4 841 417 A1**
(43) Date of publication of application: **18.11.2026**
(21) Application number: 24921406.5
(22) Date of filing: 03.09.2024
(51) Int. Cl.: G06F 3/06

(54) **STORAGE SYSTEM, DATA STORAGE METHOD AND STORAGE DEVICE**

(30) Priority: 29.01.2024 CN 202410123479
(71) Applicant: Huawei Technologies Co., Ltd., Shenzhen, Guangdong 518129 (CN)
(72) Inventor: PU, Guiyou, Shenzhen, Guangdong 518129 (CN)
(74) Representative: Huawei European IPR
(86) International application number: PCT/CN2024/116492
(87) International publication number: WO 2025/161381

(57) **Abstract**

Embodiments of this application provide a storage system, a data storage method, and a storage device. The storage device in the storage system includes a magnetic tape cartridge, so that deployment costs of the storage system can be reduced. The storage system includes: a source storage device, configured to store production data; and a backup storage device, configured to store replica data of the production data, where the backup storage device includes a magnetic tape cartridge, the magnetic tape cartridge includes a plurality of contiguous physical storage spaces, any one of the plurality of contiguous physical storage spaces includes a first space and a second space, the first space is used to store the replica data, and the second space is a reserved space OP.

## Description

This application claims priority to Chinese Patent Application No. 202410123479.1, filed with the China National Intellectual Property Administration on January 29, 2024 and entitled "STORAGE SYSTEM, DATA STORAGE METHOD, AND STORAGE DEVICE", which is incorporated herein by reference in its entirety.

### TECHNICAL FIELD

This application relates to the field of storage technologies, and in particular, to a storage system, a data storage method, and a storage device.

### BACKGROUND

A storage system typically includes a source storage device and a backup storage device. The source storage device is configured to store production data, and the backup storage device is configured to store replica data of the production data. Through such a system redundancy design, the production data is backed up and protected, thereby improving the reliability of the storage system.

Currently, the media of the source storage device and the backup storage device in the storage system are hard disk drives, for example, flash memories or magnetic disks, resulting in high deployment costs.

### SUMMARY

This application provides a storage system, a data storage method, and a storage device, to reduce networking costs of the storage system.

According to a first aspect, an embodiment of this application provides a storage system. The storage system includes: a source storage device, configured to store production data; and a backup storage device, including a magnetic tape cartridge. The magnetic tape cartridge is used as the backup storage device, so that networking costs of the storage system can be reduced. Further, the magnetic tape cartridge includes a plurality of contiguous physical storage spaces, any one of the plurality of physical storage spaces includes a first space and a second space, the first space is used to store backup data, and the second space is a reserved space. The reserved space may be used to organize data in the first space, for example, collect garbage data in the first space. Compared with a case in the conventional technology in which the reserved space is set at the end of the entire physical storage space, in this embodiment of this application, the reserved space is close to the first space, and therefore the garbage data in the first space may be collected by using the nearby reserved space, so that garbage collection efficiency is improved, and utilization of a storage space of the magnetic tape cartridge is further improved.

It should be noted herein that both the source storage device and the backup storage device provided in this embodiment of this application may be configured to store production data.

In a possible implementation, a storage medium of the source storage device is different from a storage medium of the backup storage device. In this way, corruption to both production data and replica data due to a hardware fault or a software fault of the source storage device or the backup storage device can be avoided, and therefore reliability of the storage system can be improved.

In a possible implementation, the reserved space in this embodiment of this application may be used for garbage collection, bad sector data storage, or another operation used to optimize the physical storage space.

In a possible implementation, a ratio of a capacity of the first space to a capacity of the second space is preset.

In a possible implementation, the ratio may be dynamically adjusted based on a data volume of replica data already stored in the physical storage space, until the ratio is a ratio of a capacity of an actually used storage space of the physical storage space to a total capacity of the storage space. Utilization of the storage space can be improved by dynamically adjusting the ratio.

In a possible implementation, the first space includes a plurality of first space blocks, and the second space includes a plurality of second space blocks; and the plurality of first space blocks and the plurality of second space blocks are set at intervals. In this way, a distance between the first space block and the second space block can be further shortened, so that data in the first space block can be more conveniently organized by using the second space block, and utilization of the storage space can be further improved.

In a possible implementation, the backup storage device may further obtain usage information of the plurality of first space blocks. Because the usage information of the plurality of first space blocks changes frequently and dynamically, and a read/write latency of the source storage device is less than a read/write latency of the backup storage device, in this embodiment of this application, the usage information is sent to and stored in the source storage device, so that a read/write rate of the usage information can be improved.

In a possible implementation, when a garbage amount in replica data stored in the first space exceeds a specific threshold, valid data of the replica data stored in the first space may be copied to the second space. In this way, nearby garbage collection is implemented, and garbage collection efficiency is improved.

In a possible implementation, the storage system further includes a controller, configured to send backup request information to the storage device; and the backup storage device stores, in the first space, the replica data and metadata of the replica data that are in the backup request information, where the metadata includes the metadata of the replica data. When the replica data and the metadata are stored together, the replica data corresponding to the metadata can be quickly found based on the metadata, so that data search efficiency is improved, and data can be quickly recovered when data recovery is required.

In a possible implementation, the metadata further includes time at which the source storage device receives the production data. During data recovery, the source storage device may determine, based on the time at which the source storage device receives the production data, latest replica data in a plurality of pieces of replica data corresponding to a same logical address. In this way, accuracy of recovered data is ensured, and reliability of the storage system is improved.

In a possible implementation, the backup storage device stores, based on a running direction of a magnetic tape of the magnetic tape cartridge, the replica data and the metadata in a first space block to which the running direction points. In this way, a data write rate of the backup storage device can be improved.

In a possible implementation, the source storage device is a hard disk, and the hard disk may be a solid-state drive or a hard disk drive.

According to a second aspect, an embodiment of this application further provides a data storage method. The method is performed by a storage device, and the storage device may be the backup storage device in the first aspect. The method includes: providing a magnetic tape cartridge, where the magnetic tape cartridge includes a plurality of contiguous physical storage spaces; dividing any one of the plurality of contiguous physical storage spaces into a first space and a second space; obtaining data; storing the data in the first space; and using the second space as a reserved space OP. For functions or technical effect implemented in a process of performing the data storage method by the storage device, refer to the functions or technical effect brought by any one of the first aspect and the possible implementations of the first aspect.

According to a third aspect, an embodiment of this application further provides a storage device. The storage device may be the backup storage device in the first aspect, and includes: one or more magnetic tape cartridges, where any one of the one or more magnetic tape cartridges includes a plurality of contiguous physical storage spaces; and one of the one or more magnetic tape cartridges includes a control apparatus, configured to divide any one of the plurality of contiguous physical storage spaces into a first space and a second space, where the first space is used to store data obtained by the control apparatus, and the second space is used as a reserved space. For functions or technical effect implemented in a process of performing the foregoing step by the control apparatus included in the magnetic tape cartridge, refer to the functions or technical effect brought by any one of the first aspect and the possible implementations of the first aspect.

### BRIEF DESCRIPTION OF DRAWINGS

FIG. 1 is a diagram of an architecture of a storage system according to an embodiment of this application;
FIG. 2 is a diagram of a structure of a magnetic tape cartridge in a storage system according to an embodiment of this application;
FIG. 3 is a schematic flowchart of a data storage manner according to an embodiment of this application;
FIG. 4 is a diagram of a layout of physical storage spaces of a magnetic tape included in a magnetic tape cartridge according to an embodiment of this application;
FIG. 5 is a diagram of overwrite areas according to an embodiment of this application;
FIG. 6 is a diagram of a layout of a first space and a second space in a physical storage space according to an embodiment of this application;
FIG. 7 is a diagram of garbage collection according to an embodiment of this application;
FIG. 8 is a diagram of organizing data in a first space according to an embodiment of this application; and
FIG. 9A and FIG. 9B are diagrams of a correspondence between a logical address and a physical address of an SSD and a correspondence between a logical address and a physical address of a magnetic tape cartridge according to an embodiment of this application.

### DESCRIPTION OF EMBODIMENTS

To make objectives, technical solutions, and advantages of this application clearer, the following further describes specific embodiments of this application in detail with reference to the accompanying drawings.

The following first briefly describes possible application scenarios of embodiments of this application. A storage system provided in this application can be applied to an edge computing scenario. Edge computing provides cloud services and IT environment services for application developers and service providers on edge sides of networks, and an objective is to provide computing, storage, and network bandwidth at places close to data input or users. Typical edge computing scenarios include but are not limited to the following: a wind power generation scenario; a scenario that requires real-time interaction, for example, a self-driving scenario; a smart transportation scenario; and a service with a high security requirement, for example, a facial recognition scenario. For any one of the foregoing scenarios, high reliability is required for data storage. Data corruption in any scenario may cause a huge loss. Therefore, the storage system provided in this application is applied to the foregoing edge scenario, to resolve a problem of high-reliability data deployment in the edge scenario.

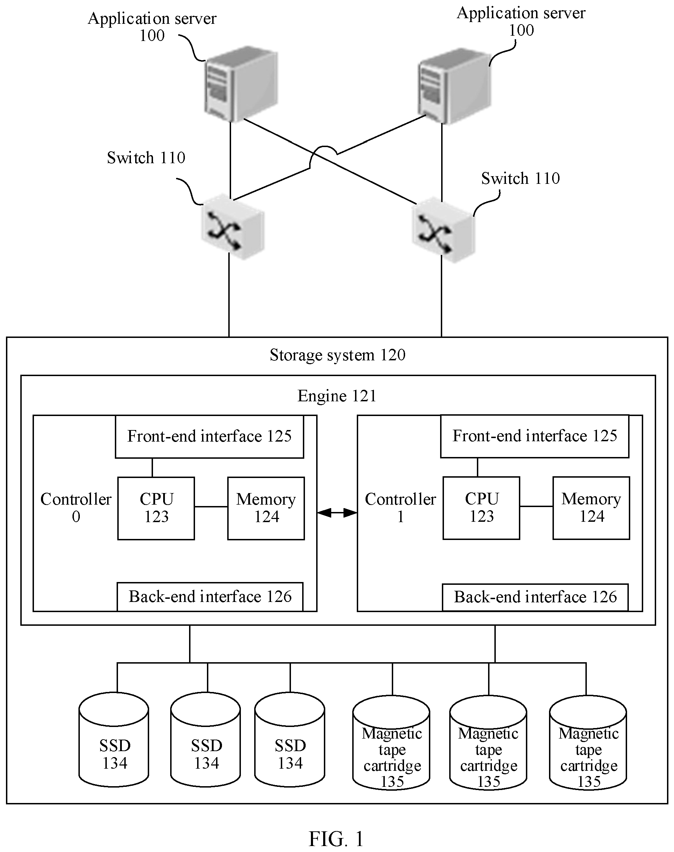

With reference to FIG. 1, a user stores data by using an application program, and a computer running the application program is referred to as an "application server". The application server 100 may be a physical machine or a virtual machine. A physical application server includes but is not limited to a desktop computer, a server, a notebook computer, and a mobile device. The application server 100 accesses a storage system 120 through a fiber channel switch 110 to read and write data. It should be noted herein that the fiber channel switch 110 is an optional device. Alternatively, the application server 100 may directly communicate with the storage system 120 via a network. The storage system 120 may be a centralized storage system, or may be a distributed storage system. Architectures of centralized storage systems include a disk-controller separated architecture and a disk-controller integrated architecture. The disk-controller integrated architecture is used for description herein.

The storage system 120 shown in FIG. 1 is a centralized storage system. The centralized storage system features a unified entry point, and all data from an external device passes through the entry point. The entry point is an engine of the centralized storage system. The engine 121 is a core component of the centralized storage system, and a large quantity of advanced functions of the storage system are implemented in the engine 121.

As shown in FIG. 1, the engine 121 includes one or more controllers. An example in which the engine 121 includes two controllers is used for description in FIG. 1. There is a mirror channel between a controller 0 and a controller 1. Therefore, after writing a piece of data into a memory 124 of the controller 0, the controller 0 may send a replica of the data to the controller 1 through the mirror channel, and the controller 1 stores the replica in a local memory 124 of the controller 1. Therefore, the controller 0 and the controller 1 serve as backups for each other. When a fault occurs on the controller 0, the controller 1 may take over a service of the controller 0; and when a fault occurs on the controller 1, the controller 0 may take over a service of the controller 1. In this way, unavailability of the entire storage system caused by a hardware fault is avoided. When four controllers are deployed in the engine 121, there is a mirror channel between any two controllers, and therefore any two controllers serve as backups for each other.

The engine 121 further includes a front-end interface 125 and a back-end interface 126. The front-end interface 125 is configured to communicate with the application server 100, to provide a storage service for the application server 100. The back-end interface 126 is configured to communicate with a storage device, to expand a capacity of the storage system. The engine 121 may be connected to more storage devices through the back-end interface 126, to form a very large storage resource pool.

The engine 121 further includes a processor 123. The processor 123 may be a central processing unit (Central processing unit, CPU), configured to process a data access request from the outside (a server or another storage system) of the storage system, and also configured to process a request generated inside the storage system. In an example, when receiving, through the front-end interface 125, a data write request sent by the application server 100, the processor 123 temporarily stores data in the data write request in the memory 124. When a total amount of data in the memory 124 reaches a specific threshold, the processor 123 sends, through the back-end interface 126, the data stored in the memory 124 to the storage device for persistent storage.

It should be noted that FIG. 1 shows only one engine 121. However, during actual application, the storage system may include two or more engines 121, and redundancy or load balancing is performed among a plurality of engines 121.

In the system, storage devices include two parts: a source storage device 134 and a backup storage device 135. When the engine 121 has hard disk slots, the source storage device 134 and the backup storage device 135 may be directly deployed in the engine 121; or the source storage device 1341 is deployed in the engine 121, and the backup storage device 135 is placed in a hard disk enclosure, where the hard disk enclosure is in communication connection to the back-end interface 126. When the engine 121 does not have hard disk slots, the source storage device 134 and the backup storage device 135 are placed in one hard disk enclosure, where the hard disk enclosure is in communication connection to the back-end interface 126; or the source storage device 134 is placed in one hard disk enclosure, and the backup storage device 135 is placed in another hard disk enclosure, where the two hard disk enclosures are separately in communication connection to the back-end interface 126. The backup storage device 135 is configured to back up and store data in the source storage device 134. The source storage device 134 may be a solid-state drive (Solid-state drive or Solid-state disk, SSD) array or a hard disk drive (Hard disk drive, HDD). The backup storage device 135 includes one or more magnetic tape cartridges. The magnetic tape cartridge is a storage device in which a magnetic tape and a magnetic head are integrated and packaged together. Compared with existing magnetic tape systems, the magnetic tape cartridge enables a more simplified deployment, without requiring introduction of manual or robotic arm-based replacement, and without requiring occupying a large amount of space for deployment. In the following descriptions, an example in which the source storage device 134 is an SSD and the backup storage device is a magnetic tape cartridge is used. Compared with other hard disk devices, the magnetic tape cartridge is more cost-effective, which can reduce deployment costs of the storage system. Further, when the source storage device 134 is an SSD, and the backup storage device 135 is a magnetic tape cartridge, the SSD and the magnetic tape cartridge are storage devices of different media types, thereby avoiding a scenario in which data stored on both the SSD and the tape cartridge is entirely corrupted due to a hardware failure or a software failure, and thus improving the reliability of the storage system.

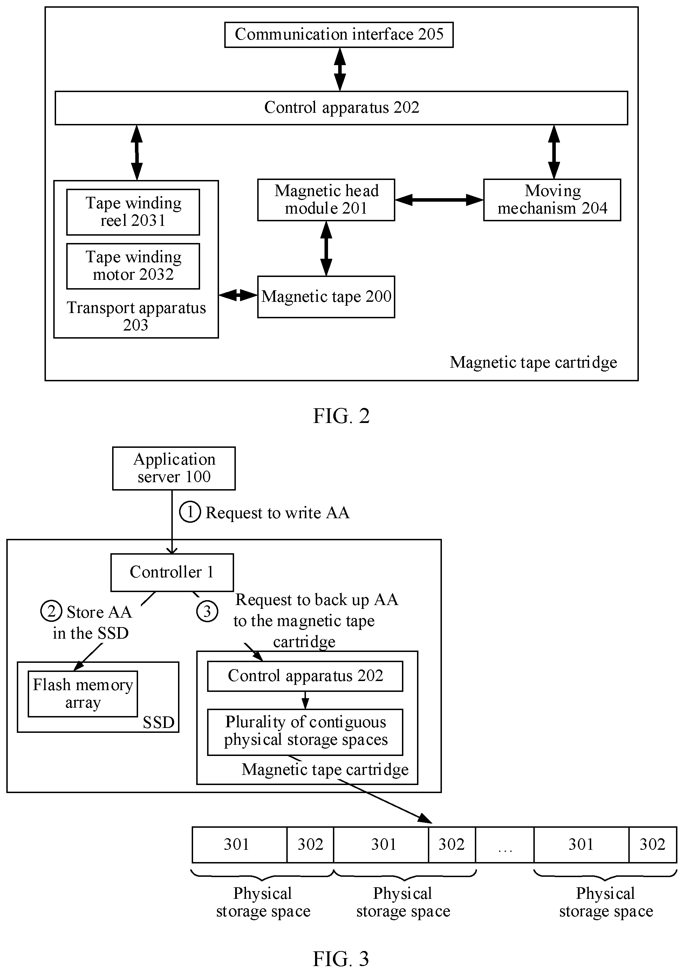

In terms of hardware, with reference to FIG. 2, the magnetic tape cartridge includes: a magnetic tape 200, a magnetic head module 201, a control apparatus 202, and a transport apparatus 203.

The magnetic tape 200 has a magnetic layer, a base film, and a back coating. The magnetic layer is formed on one surface of the base film, and the back coating is formed on the other surface of the base film. Data is recorded in the magnetic layer, and the magnetic layer is usually made of a metal oxide, for example, iron oxide or chromium dioxide. The base film, also referred to as a support body, is a base material that provides flexibility and strength, and may be made of polyethylene terephthalate, polyethylene naphthalate, or polyimide. The back coating is a layer including non-magnetic powder, for example, carbon black. It should be noted that a non-magnetic layer may also be formed between the base film and the magnetic layer. In the magnetic tape, the surface on which the magnetic layer is formed is a front surface of the magnetic tape, and a surface on which the back coating is formed is a back surface of the magnetic tape.

The control apparatus 202 is configured to control the magnetic tape 200, the magnetic head module 201, and the transport apparatus 203. The control apparatus 202 includes a processor and a memory. The processor may be an application-specific integrated circuit (Application-Specific Integrated Circuit, ASIC), a field programmable gate array (Field Programmable Gate Array, FPGA), a programmable logic controller (Programmable Logic Controller, PLC), or a combination of any two or more of the foregoing implementations.

The transport apparatus 203 is an apparatus that selectively enables the magnetic tape to travel along a specified path in a forward direction or a backward direction, and includes a tape winding reel 2031, a tape winding motor 2032, and a plurality of rollers. It should be noted that, herein, the forward direction is a direction in which the magnetic tape is fed, and the backward direction is a direction in which the magnetic tape is rewound.

The tape winding motor 2032 rotates the tape winding reel 2031 under control of the control apparatus 202, and the controller 202 controls the tape winding motor 2032 to control a rotation direction, a rotation speed, a rotation torque, and the like of the tape winding reel 2031.

When the magnetic tape is wound by the tape winding reel 2031, the control apparatus 202 rotates the tape winding motor 2032, so that the magnetic tape travels along the specified path in the forward direction. In addition, when the magnetic tape is rewound, the control apparatus 202 rotates the tape winding motor 2032, so that the magnetic tape moves along the specified path in the backward direction.

The magnetic head module 201 includes at least one magnetic head. The magnetic head includes a magnetic element and a support frame. The magnetic element is held by a holder to be in contact with the traveling magnetic tape. The magnetic element unit records data in the magnetic tape that travels along the specified path via the transport apparatus 203, or reads data from the magnetic tape that travels along the specified path via the transport apparatus 203.

Further, the magnetic tape includes a moving mechanism 204. The moving mechanism 204 includes a moving actuator. The moving actuator may be a voice coil motor (Voice Coil Motor, VCM) and/or a piezoelectric actuator. The moving actuator is connected to the control apparatus 202, and the control apparatus 202 controls the moving actuator, so that the moving controller generates power to enable the magnetic head module 201 to move in a width direction of the magnetic tape.

Further, the magnetic tape cartridge includes a communication interface 205. The communication interface 205 is connected to an external apparatus via a communication network such as a wide area network (Wide Area Network, WAN) or a local area network (Local Area Network, LAN). In this embodiment of this application, the external apparatus may be the back-end interface 126 of the storage system. In this way, data sent by the controller of the storage system through the back-end interface is received.

In this embodiment of this application, the storage system shown in FIG. 1 may provide, but not limited to, the following two functions:

First, the storage system shown in FIG. 1 may be configured to store production data. In an example, the SSD is configured to store hot data in the production data, and the magnetic tape cartridge is configured to store cold data in the production data. The hot data is data that is frequently updated by the user, and the cold data is data that is not frequently updated by the user. Correspondingly, during data reading, in the system, the SSD is queried first, and if data is found, the data is read from the SSD; or if data is not found, the data is read from the magnetic tape cartridge.

Second, the storage system shown in FIG. 1 is not only configured to store production data, but also configured to back up the production data. In an example, the SSD is configured to store the production data, and the magnetic tape cartridge is configured to store replica data of the production data. In this way, when the production data stored in the SSD is corrupted, data recovery is performed by using the replica data in the magnetic tape cartridge.

A process in which the magnetic tape cartridge is configured to store production data is similar to a process in which the magnetic tape cartridge is configured to store replica data. In the following descriptions, an example in which the magnetic tape cartridge is configured to store replica data is used for description. For the process, refer to FIG. 3. For the process in which the magnetic tape cartridge is configured to store production data, refer to the process described below. Details are not described herein.

Further, the controller 0 or the controller 1 included in the storage system receives a write request sent by the application server 100. The write request includes to-be-stored production data. In FIG. 3, in step ①, the application server 100 sends the write request to the controller 1. In step ②, the controller first stores the to-be-stored production data in the memory 124 of the controller, then sends the production data to the SSD through the back-end interface 126 for storage in a flash memory array of the SSD. In this embodiment of this application, a form of storing the production data in the SSD is not limited, and may be specifically block storage or file storage. The block storage is to store data in one or more blocks (block) of a fixed length. The block is based on a page (page), and one or more consecutive pages form one block. The file storage is to store data in a file whose length is not fixed. A single file may include one or more logical blocks, and the logical blocks are not consecutively distributed.

The production data may be data collected in the edge scenario described above, for example, facial data collected in the facial recognition scenario, road data collected in the autonomous driving scenario, or environmental data collected through a sensor. After the production data is stored in the SSD, the controller may store replica data of the production data in the magnetic tape cartridge according to a specific policy. In an example, at a fixed time point every day, for example, at 1:00 a.m., replica data of production data stored in the SSD before the time point is stored in the magnetic tape cartridge. For ease of presentation in FIG. 3, an example in which the production data is AA is used.

The foregoing describes the process of storing the production data in the SSD. The following continues to describe a process of storing the replica data in the magnetic tape cartridge in the storage system provided in this application. Before the process is described, a storage space layout of the magnetic tape in the magnetic tape cartridge is first described. With reference to FIG. 3, the magnetic tape includes a plurality of contiguous physical storage spaces, any one of the plurality of contiguous physical storage spaces includes a space 301 and a space 302, the space 301 is used to store the replica data, and the space 302 is a reserved space (Over-Provisioning, OP). The reserved space is a space that is inoperable and invisible to the user, and a capacity of the space is an actual capacity minus a user-available capacity. The OP area is usually used for an optimization operation. For example, the reserved space is used to organize data in the space, and more specifically, to collect garbage data in the space 301. Because the reserved space 302 is close to the space 301, compared with a case in the conventional technology in which the reserved space 302 is set at the end of the entire physical storage space, in this embodiment of this application, the garbage data in the space 301 may be collected by using the nearby reserved space 302, so that garbage collection efficiency is improved, and space utilization of the magnetic tape cartridge is further improved. It should be noted herein that the space 301 is a first space, and the space 302 is a second space. In subsequent descriptions, the reserved space is also represented by 302.

In an example, the reserved space 302 is used to store, during garbage collection, valid data in the replica data stored in the storage space 301. When there is garbage data in the space 301, to improve space utilization of the space 301, the garbage data needs to be collected. The garbage data may be invalid data in the replica data, and the invalid data may be backup-expired data. Because the magnetic tape cartridge uses sequential writing, if data stored in the space 301 needs to be modified, the valid data in the replica data stored in the space 301 needs to be copied to a blank space. The blank space is an unwritten space, that is, the reserved space 302 in this embodiment of this application. Then, the data in the space 301 is overwritten. Otherwise, the valid data in the stored replica data is lost.

In another example, the reserved space is used to store, when the space 301 is corrupted, the replica data stored in the space 301. When the backup storage device is delivered from a factory, or when the space 301 is corrupted during use, the replica data stored in the space 301 may be copied to the reserved space 302, to avoid a loss of the replica data stored in the space 301.

Any physical storage space may include a space 301 and a reserved space 302. Regarding determining of a ratio of a capacity of the space 301 to a capacity of the reserved space 302, in this embodiment of this application, the ratio of the capacity of the space 301 to the capacity of the reserved space 302 may be preset when no data is written into any physical storage space. In an example, a half of the physical storage space is used as the space 301 to store replica data, and the other half of the physical storage space is used as the reserved space 302 to organize the data stored in the space 301. In this case, the ratio is 1. In a data storage process, the ratio may be fixed, or may dynamically change with the amount of written data. In an example, a total storage space capacity of the physical storage space is 120 TB, a space capacity of the written data is 50 TB, and the ratio is 5/12. In this case, the ratio is adjusted from 1 to 5/12. Under the ratio, the capacity of the space 301 in the physical storage space is 50 TB, and the capacity of the reserved space 302 is 70 TB. Further, an example in which the physical storage space is 120 TB and a user-available space is 100 TB is used. In this case, the remaining 20 TB is a user-unavailable space, that is, an OP space. When the user-available space is fully written, the capacity of the space 301 is 100 TB, the reserved space 302 is 20 TB, and the ratio is 5. Therefore, when the preset value is 1, the ratio may be dynamically adjusted until the ratio is 5, and no further adjustment is performed. The foregoing is only an implementation in which the ratio of the capacity of the space 301 to the capacity of the space 302 is adjusted. Certainly, during specific implementation, another adjustment manner may be further used. This is not limited herein.

As described above, the ratio may be adjusted. When the ratio is adjusted is not specifically limited in this embodiment of this application. The ratio of the capacity of the space 301 to the capacity of the reserved space 302 may be adjusted when the replica data is written into the physical storage space; the ratio of the capacity of the space 301 to the capacity of the space 302 may be dynamically adjusted based on a preset time interval, for example, five hours, 12 hours, 24 hours, or one week; or the ratio may be adjusted in another manner.

Still refer to FIG. 3. The space 301 and the reserved space 302 are consecutive physical spaces obtained by dividing any physical storage space. In other words, a physical address of the space 302 and a physical address of the reserved space 301 are consecutive. In FIG. 3, the physical address of the space 302 is after the physical address of the space 301. Certainly, the physical address of the space 301 may alternatively be after the physical address of the space 302.

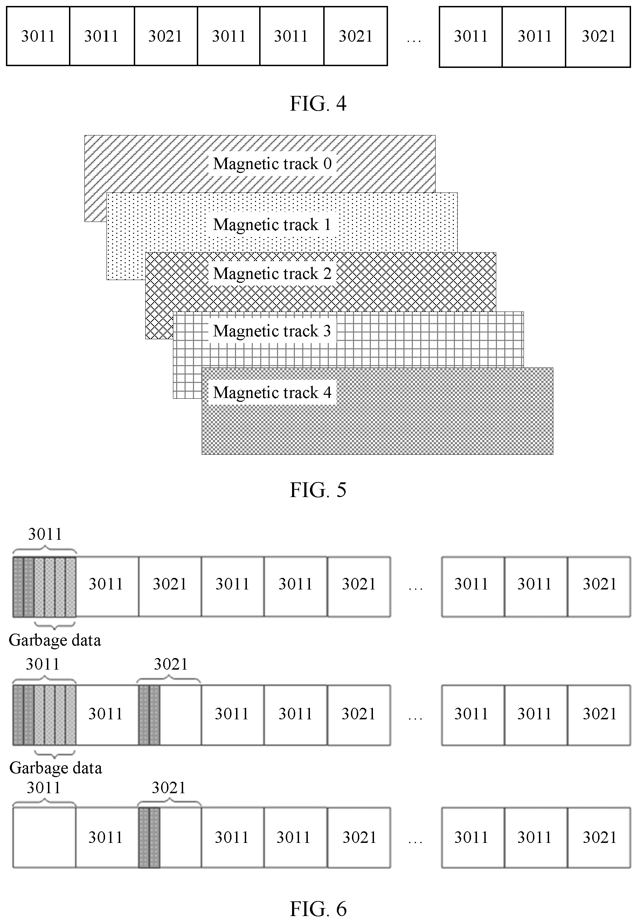

In another example, the space 301 may be a plurality of logically consecutive physical spaces, and the space 302 is a plurality of logically consecutive physical spaces. In other words, the space 301 includes a plurality of space blocks 3011 with non-consecutive physical addresses, the reserved space 302 includes a plurality of space blocks 3021 with non-consecutive physical addresses, and the plurality of space blocks 3011 and the plurality of space blocks 3021 are set at intervals. The interval setting manner may be 3011, 3021, 3011, 3021, ..., 3011, 3021, or may be 3011, 3011, 3021, 3011, 3011, 3021, ..., 3011, 3011, 3021. For details, refer to FIG. 4. When the plurality of space blocks 3011 and the plurality of space blocks 3021 are set at intervals, a distance between the space block 3011 and the space block 3021 is further shortened, so that data stored in the space block 3011 can be more conveniently organized by using the space block 3021, and utilization of the space 301 can be further improved. It should be noted herein that the space block 3011 is a first space block included in the space 301, and the space block 3021 is a second space block included in the space 302.

When the space 301 is divided into a plurality of space blocks 3011, and the space 302 is divided into a plurality of space blocks 3021, the plurality of space blocks 3011 and the plurality of space blocks 3021 may be set based on the foregoing initial ratio and setting manner. When the ratio is dynamically adjusted subsequently, only usage of the plurality of space blocks 3021 needs to be dynamically adjusted. In an example, the usage of the space blocks 3021 may be represented by a numeric symbol, where 1 represents that the space block is used as a reserved space, and 2 represents that the space block is used to store replica data. Certainly, there may be another representation manner, which is not limited herein.

When the ratio of the capacity of the space 301 to the capacity of the reserved space 302 is determined, in this embodiment of this application, capacities of the plurality of space blocks 3011 are the same, capacities of the plurality of space blocks 3021 are the same, and the capacity of the space block 3011 may also be the same as the capacity of the space block 3021. The capacity of the space block 3021 may be based on a size of an overwrite area as a basic unit. With reference to FIG. 5, the overwrite area includes a plurality of magnetic tracks, the magnetic tracks are stacked on top of each other to form a tile-like structure, and each magnetic track ensures that a part of space is exposed to allow a read head to normally read data. The magnetic tracks are stacked on top of each other, and a width of a write head is greater than a width of the read head. Therefore, when data is stored on each magnetic track (a magnetic track 0 to a magnetic track 4), if the data on the magnetic track needs to be modified, a specific problem occurs. The magnetic track 1 is used as an example. When data is written on the magnetic track 1, the data that has been written on the magnetic track 2 is overwritten. The overwrite area herein is an area of a next magnetic track that is overwritten when the write head writes a current magnetic track.

After the space layout of the magnetic tape is described, how to store data, collect garbage, and assist in data recovery based on a running direction of the magnetic tape and the space layout of the magnetic tape storage space after the magnetic tape cartridge receives the replica data is further described.

### (1) Replica data storage

When data backup needs to be performed, the controller of the storage system sends backup request information to the control apparatus 202 of the magnetic tape cartridge. After the request information is received, the replica data and metadata in the request information are stored in the space 301. This step is denoted by ③. The replica data herein includes a batch of data blocks. Correspondingly, each data block in the batch of data blocks has corresponding metadata. The metadata is data that describes service data, is mainly information that describes a data attribute, and is used to support functions such as storage location indication, historical data, resource lookup, and file recording. For example, metadata indicating a piece of service data includes a length of the service data and a physical location of the service data on the storage device. However, in this embodiment of this application, the metadata includes a logical address, of each data block, stored in the SSD.

When the replica data is a batch of data blocks, the magnetic tape cartridge sequentially stores each data block and metadata of each data block in the space 301. With reference to FIG. 3, when the space 301 includes a plurality of space blocks 3011, the control apparatus 202 sequentially stores, based on the running direction of the magnetic tape, data blocks and metadata corresponding to the data blocks in a space block 3011 to which the running direction points, and when a capacity of the space block 3011 is insufficient, the remaining data is stored in a next space block 3011 of the space block 3011. Because a writing manner of the magnetic tape cartridge is sequential writing, determining a space block for storage in this manner improves write efficiency of the magnetic tape cartridge.

In this embodiment of this application, in addition to the logical address corresponding to the data block, the metadata further includes time at which the SSD receives the data block, that is, time at which the data block included in the replica data is received by the SSD, so that during data recovery, final to-be-recovered data is determined based on the time at which the SSD receives the data block. Further, the metadata may include a size of the data block or other description information of the data block.

### (2) Garbage collection

The foregoing describes how the magnetic tape cartridge stores the replica data. The following further describes how to perform garbage collection and monitor a usage status of each space block 3011 in the space 301 when there is garbage data in the stored replica data after the replica data is stored.

The control apparatus 202 is configured to obtain usage information of the space block 3011, including a write status of the space block 3011. Based on obtaining of the write status of the space block 3011, a used space capacity and an unused space capacity of the physical storage space may be obtained, so that the physical storage space can be further planned. The write status of the space block 3011 may be identified by using a corresponding symbol. The symbol may be a data symbol. For example, "0" indicates "unwritten", and "1" indicates "written". Alternatively, the symbol may be an alphabetic symbol. For example, "Y" indicates "written", and "N" indicates "unwritten".

Further, the usage information includes the amount of garbage in the space block 3011, and a garbage collection algorithm for the plurality of space blocks 3011 may be a mark-and-sweep algorithm. After obtaining the usage information, the control apparatus 202 sends the usage information to the controller of the storage system, and the controller of the storage system stores the usage information in the SSD. Because a read/write latency of the SSD is less than a read/write latency of the magnetic tape, and the usage information of the space block 3011 is information that needs to be frequently updated, after the usage information is stored in the SSD, the controller can quickly obtain the usage information, and require, based on the usage information, the magnetic tape cartridge to write the obtained replica data or to organize the data in the space 301, so that utilization of the storage space of the magnetic tape can be improved.

Further, during specific implementation, the control apparatus 202 may periodically send request information to the controller, to obtain usage information of the space 301 that is stored in the SSD, further obtain the amount of garbage in the space 301, and determine whether to perform garbage collection. When the amount of garbage in the replica data stored in the space 301 exceeds a specific threshold, valid data in the replica data stored in the space 301 is copied to the space 302, and the replica data stored in the space 301 is erased. Refer to FIG. 6. Any space block 3011 in the space 301 and any space block 3021 in the space 302 in FIG. 3 are used as an example. When the amount of garbage in the space block 3011 exceeds the specific threshold, valid data in replica data stored in the space block 3011 is copied to the space block 3021, and then the space block 3011 is overwritten to obtain a blank space block 3011 for subsequent data writing. When the space block 3021 is not fully written, to improve space utilization, the space block may be filled with user data, padded with zeros, or left blank, that is, no filling is performed.

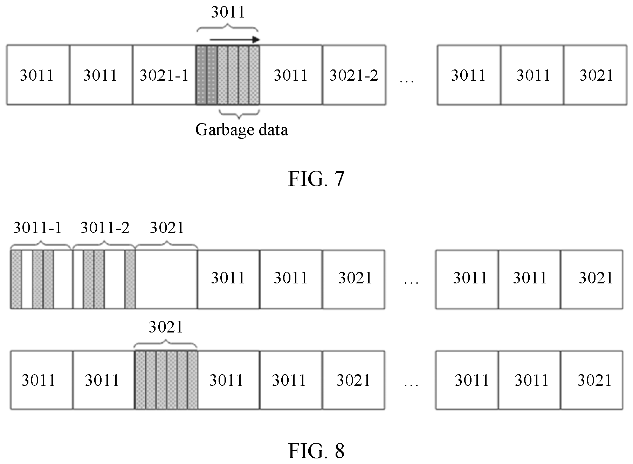

In this embodiment of this application, a space block 3021 used for garbage collection is determined based on the current running direction of the magnetic tape, a current running location, and a space block 3021 adjacent to a space block 3011 on which garbage collection needs to be performed. Specifically, with reference to FIG. 7, when the amount of garbage in a first space block 3011 in FIG. 7 exceeds the specific threshold, and garbage collection needs to be performed, there are two space blocks 3021 that are adjacent to the space block 3011 and that can be used for garbage collection. For ease of distinguishing and description, the two space blocks 3021 are respectively denoted by 3021-1 and 3021-2. One of the space block 3021-1 and the space block 3021-2 is determined as a space block used for garbage collection. As shown by an arrow in FIG. 7, a direction pointed to by the arrow is the current running direction of the magnetic tape, and a location of the arrow is the current running location of the magnetic tape. Based on this, it is further determined that the space block 3021-2 is used for garbage collection. In this way, nearby garbage collection is implemented, and garbage collection efficiency is improved.

In this embodiment of this application, in addition to performing garbage collection to improve utilization of the storage space, utilization of the storage space may be further improved through data organization. With reference to FIG. 8, for ease of description, the space blocks included in the space 301 shown in FIG. 3 are denoted by 3011-1 and 3011-2. If both the space blocks 3011-1 and 3011-2 are not fully written with data, because the magnetic tape uses a sequential writing manner, even if there are blank spaces in both the space blocks, data cannot be further written. To improve utilization of the storage space, replica data stored in the space block 3011-1 and replica data stored in the space block 3011-2 are copied to the space block 3021. In this way, the space block 3011-1 and the space block 3011-2 can be overwritten to obtain a blank space block 3011-1 and a blank space block 3011-2.

### (3) Data recovery

A purpose of the backup storage device set in the storage system is as follows: When production data stored in the source storage device is corrupted due to a fault of the source storage device, data recovery may be performed based on replica data stored in the backup storage device. It is assumed that production data stored in the SSD is lost due to a hardware device fault of the SSD. After the SSD fault is rectified, the production data stored in the SSD needs to be recovered. In this case, the controller sends a data recovery request to the control apparatus 202. The data recovery request may include faulty device information and to-be-recovered data information. The faulty device information may be a faulty device identifier, and is used to identify which SSDs are faulty. The to-be-recovered data information is a time period, a logical address, or the like of the to-be-recovered data information. The following provides descriptions in different cases.

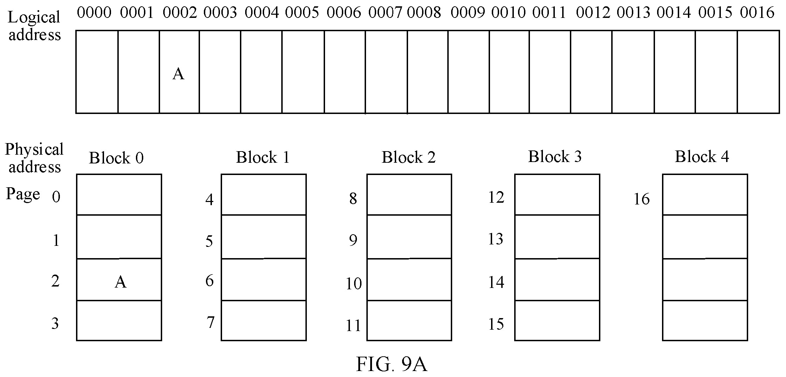

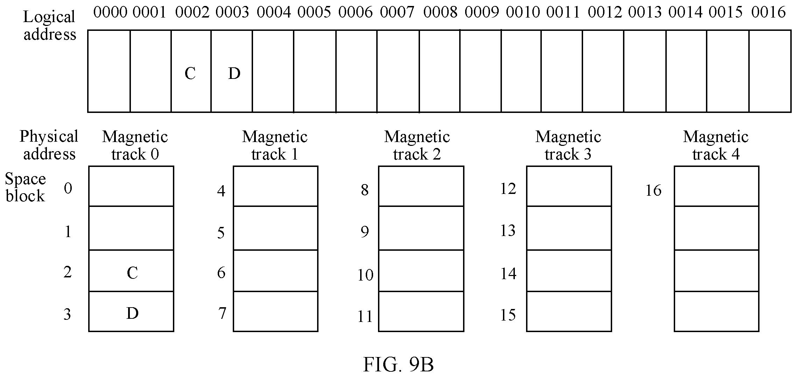

Before the data recovery process is described, how modified data is backed up on the magnetic tape cartridge when the production data stored in the SSD needs to be modified is briefly described. In an example, it is assumed that the production data stored in the SSD needs to be modified for a specific cause, for example, a character A in the production data is modified to a character B. In this case, after the modification in the SSD succeeds, the character A in the magnetic tape cartridge is not directly modified to the character B. As mentioned in the foregoing descriptions, the magnetic tape does not support random writing, but supports sequential writing. This determines that the magnetic tape cartridge cannot modify the character A in place, but stores the character B in a blank area. In this way, both the character A before modification and the character B after modification exist on the magnetic tape. Because the character A and the character B correspond to a same logical address when being stored in the SSD, the character A and the character B also correspond to a same logical address in the magnetic tape cartridge. Herein, a correspondence between a logical address and a physical address when the character A is stored in the SSD is briefly described. The logical address is an address presented by a storage device, for example, the SSD or the magnetic tape cartridge, to the controller. Because the controller is unaware of an actual address of data stored in the storage device, the controller can access the storage device only by using the logical address. The physical address is an address at which data is actually stored in the SSD or the magnetic tape cartridge, and the controller is unaware of the physical address. For the SSD, the physical address includes a block ID and a page ID. For the magnetic tape cartridge, the physical address includes a magnetic track ID and a space block ID. With reference to FIG. 9A, it is assumed that a logical address of a character A stored in the SSD is 0002, and a physical address of the character A stored in the SSD is a page 2 in a block 0. Correspondingly, with reference to FIG. 9B, it is assumed that logical addresses of a character C and a character D stored in the magnetic tape cartridge are 0002 and 0003, a physical address of the character C stored in the magnetic tape cartridge is a space block 2 on a magnetic track 0, and a physical address of the character D stored in the magnetic tape cartridge is a space block 3 on the magnetic track 0.

Case 1: All production data stored in the SSD needs to be recovered.

The case in which all the production data stored in the SSD needs to be recovered is also referred to as full recovery. In this case, after receiving the data recovery request, the control apparatus 202 traverses metadata stored on the magnetic tape, finds corresponding data blocks based on the metadata, and then sends the metadata and the corresponding data blocks to the controller of the storage system. After the controller receives the metadata and the corresponding data blocks, not all data blocks in the received data blocks need to be recovered. As described above, the character A is data that is modified and discarded in the SSD, and is also stored in the magnetic tape. Certainly, the character A does not need to be recovered. Therefore, before storing the received data blocks in the SSD, the controller may determine, based on time that is recorded in the metadata and at which each data block is received by the SSD, a data block that finally needs to be recovered. In an example, for a same logical address, there are three pieces of corresponding data on the magnetic tape, and time at which the three pieces of data are received by the SSD is respectively January 1, 2024, January 6, 2024, and January 8, 2024. Therefore, the controller selects, based on the time, data corresponding to the latest time as to-be-recovered data, that is, uses data corresponding to January 8, 2024 as the to-be-recovered data. After filtering is completed, the controller stores the corresponding data in the SSD based on the logical address recorded in the metadata.

Case 2: A part of production data stored in the SSD needs to be recovered.

The case in which the part of production data stored in the SSD needs to be recovered is also referred to as partial recovery. "Partial" may mean data stored in the SSD in a specific time period. A partial recovery process is similar to the full recovery process, and a difference lies only in that the control apparatus 202 sends a data block that meets a requirement and corresponding metadata to the SSD, where the requirement is a requirement of the specific time period. The control apparatus 202 may query, in a scanning manner, metadata that meets a requirement, and then read a corresponding data block; or use an index of a faulty device to accelerate the query of the metadata that meets the requirement, and then read the corresponding data block.

An embodiment of this application further includes a magnetic tape, including a plurality of contiguous physical storage spaces. Any one of the plurality of contiguous physical storage spaces includes the space 301 and the space 302 shown in FIG. 3. The space 301 is used to store data. For a process of storing the data in the space 301, refer to the process of storing the replica data shown in FIG. 3. The space 302 is used as a reserved space, and may be used to optimize the data stored in the space 301. For details, refer to the related content recorded above. Details are not described herein again.

An embodiment of this application further provides a control apparatus. The control apparatus is configured to divide a storage space of the magnetic tape shown in the second aspect into a plurality of contiguous physical storage spaces, and divide any one of the plurality of contiguous physical storage spaces into a space 301 and a space 302. The space 301 is used to store data. For a process of storing the data in the space 301, refer to the process of storing the replica data shown in FIG. 3. The space 302 is used as a reserved space, and is used to optimize the data stored in the space 301. For details, refer to the related content recorded above. Details are not described herein again. It should be noted herein that the control apparatus in the third aspect and the magnetic tape in the second aspect may be integrated together, that is, the magnetic tape cartridge shown in FIG. 2. Certainly, the control apparatus in the third aspect and the magnetic tape in the second aspect may not be integrated together. The two implementations may be selected based on actual situations. This is not limited herein.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A storage system, comprising:
a source storage device, configured to store production data; and
a backup storage device, configured to store replica data of the production data, wherein
the backup storage device comprises a magnetic tape cartridge, the magnetic tape cartridge comprises a plurality of contiguous physical storage spaces, any one of the plurality of contiguous physical storage spaces comprises a first space and a second space, the first space is used to store the replica data, and the second space is a reserved space OP.

2. The storage system according to claim 1, wherein
the reserved space is used to store, during garbage collection, valid data in the replica data stored in the first space; or
the reserved space is used to store, when the first space is corrupted, the replica data stored in the first space.

3. The storage system according to claim 1, wherein
a ratio of a capacity of the first space to a capacity of the second space is preset.

4. The storage system according to claim 3, wherein the backup storage device is further configured to:
adjust the ratio, wherein the ratio is less than or equal to a ratio of a capacity of an actually used storage space of the physical storage space to a total capacity of the physical storage space.

5. The storage system according to any one of claims 1 to 4, wherein the first space comprises a plurality of first space blocks, and the second space comprises a plurality of second space blocks; and
the plurality of first space blocks and the plurality of second space blocks are set at intervals.

6. The storage system according to claim 5, wherein the backup storage device is further configured to:
obtain usage information of the plurality of first space blocks, wherein the usage information comprises a write status of each of the plurality of first space blocks and a garbage amount in each first space block; and
send the usage information to the source storage device for storage in the source storage device, wherein a read/write latency of the source storage device is less than a read/write latency of the backup storage device.

7. The storage system according to any one of claims 1 to 4, wherein the backup storage device is further configured to: when a garbage amount in the replica data stored in the first space exceeds a specific threshold, copy the valid data in the replica data stored in the first space to the second space, and erase the replica data stored in the first space.

8. The storage system according to claim 1, wherein the storage system further comprises a controller, and the controller is configured to:
send backup request information to the backup storage device, wherein the backup request information comprises the replica data and metadata of the replica data, and the metadata comprises a logical address of the data to be backed up; and
the backup storage device is specifically configured to store the replica data and the metadata in the first space.

9. The storage system according to claim 8, wherein the backup storage device is specifically configured to:
determine, based on a running direction of a magnetic tape comprised in the magnetic tape cartridge, a first space block to which the running direction points; and
store the replica data and the metadata in the first space block to which the running direction points.

10. The storage system according to claim 1, wherein the source storage device is a hard disk.

11. A data storage method, performed by a storage device, wherein the method comprises:
providing a magnetic tape cartridge, wherein the magnetic tape cartridge comprises a plurality of contiguous physical storage spaces;
dividing any one of the plurality of contiguous physical storage spaces into a first space and a second space;
obtaining data;
storing the data in the first space; and
using the second space as a reserved space OP.

12. The data storage method according to claim 11, wherein
the reserved space is used to store, during garbage collection, valid data in the data stored in the first space; or
the reserved space is used to store, when the first space is corrupted, the data stored in the first space.

13. The data storage method according to claim 11, wherein the first space comprises a plurality of first space blocks, and storing the data in the first space comprises:
determining, based on a running direction of a magnetic tape comprised in the magnetic tape cartridge, a first space block to which the running direction points; and
storing the data in the first space block to which the running direction points.

14. The data storage method according to claim 11, wherein when a garbage amount in the data stored in the first space exceeds a specific threshold, valid data in the data stored in the first space is copied to the second space, and the data stored in the first space is erased.

15. The data storage method according to claim 11, wherein the data is backup data of production data stored in a source storage device, and the method further comprises:
receiving backup request information, wherein the backup request information comprises the data and metadata of the data, and the metadata comprises a logical address of the data; and
storing the data and the metadata in the first space.

16. A storage device, comprising:
one or more magnetic tape cartridges, wherein any one of the one or more magnetic tape cartridges comprises a plurality of contiguous physical storage spaces; and
one of the one or more magnetic tape cartridges comprises a control apparatus, configured to divide any one of the plurality of contiguous physical storage spaces into a first space and a second space, wherein the first space is used to store data obtained by the control apparatus, and the second space is used as a reserved space.

17. The storage device according to claim 16, wherein
the reserved space is used to store, during garbage collection, valid data in the data stored in the first space; or
the reserved space is used to store, when the first space is corrupted, the data stored in the first space.

18. The storage device according to claim 16, wherein
a ratio of a capacity of the first space to a capacity of the second space is preset.

19. The storage device according to claim 18, wherein the control apparatus is further configured to:
adjust the ratio, wherein the ratio is less than or equal to a ratio of a capacity of an actually used storage space of the backup storage device to a total capacity of the storage space.

20. The storage device according to any one of claims 16 to 19, wherein the first space comprises a plurality of first space blocks, and the second space comprises a plurality of second space blocks; and
the plurality of first space blocks and the plurality of second space blocks are set at intervals.

21. The storage device according to claim 20, wherein the control apparatus is specifically configured to:
determine, based on a running direction of a magnetic tape comprised in the magnetic tape cartridge, a first space block to which the running direction points; and
store the data in the first space block to which the running direction points.

22. The storage device according to claim 16, wherein the control apparatus is further configured to:
when a garbage amount in the data stored in the first space exceeds a specific threshold, copy valid data in the data stored in the first space to the second space, and erase the data stored in the first space.

23. The storage device according to claim 16, wherein the data is backup data of production data stored in a source storage device, and the control apparatus is further configured to:
receive backup request information, wherein the backup request information comprises the data and metadata of the data, and the metadata comprises a logical address of the data; and
store the data and the metadata in the first space.
